# EUROPEAN PATENT APPLICATION

(11) **EP 2 431 904 A1**
(43) Date of publication of application: **21.03.2012**
(21) Application number: 11159086.5
(22) Date of filing: 21.03.2011
(51) Int. Cl.: G06F 21/20

(54) **Circumstantial authentication**

(30) Priority: 21.09.2010 US 384908 P
(71) Applicant: Research In Motion Limited, Waterloo, ON N2L 3W8 (CA); Certicom Corp., Mississauga, ON L4W 5L1 (CA)
(72) Inventor: Labrador, Christopher, Waterloo Ontario N2L 3W8 (CA); Antipa, Adrian, Mississauga Ontario L4W 5L1 (CA); Marsden, Russ, Irving TX 75039 (US)
(74) Representative: Fennell, Gareth Charles

(57) **Abstract**

An authentication system is provided. The authentication system comprises a first component configured to obtain information specific to an individual, a second component configured to dynamically formulate at least one challenge question based on the information, a third component configured to cause the at least one challenge question to be presented on a device when the device is used to perform an act that involves authentication, and a fourth component configured to judge authenticity based on an answer to the at least one challenge question.

## Description

### BACKGROUND

Various authentication procedures might be used to verify the identity of a person attempting to create, modify, delete, or otherwise gain access to data, services, or applications controlled by an authenticating entity. Performing any such action may be referred to herein by phrases such as "performing an act that involves authentication" or similar terminology.

Three categories of factors that can be used for authentication have traditionally been described. A first category deals with things a person knows, such as a password or a personal identification number. A second category deals with things a person has, such as a mobile telephone or a card with a magnetic strip. A third category deals with who a person is or with things inherent only to that person, such as a signature or fingerprints.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates components that might make use of a circumstantial authentication system, according to an embodiment of the disclosure.

Figure 2 illustrates components that might make use of a circumstantial authentication system, according to an alternative embodiment of the disclosure.

Figure 3 is a flowchart for a method for circumstantial authentication, according to an embodiment of the disclosure.

Figure 4 illustrates a set of tables containing data that might be used in a circumstantial authentication system, according to an embodiment of the disclosure.

Figure 5 illustrates a user interface containing a table that might be used in a circumstantial authentication system, according to an embodiment of the disclosure.

Figure 6 illustrates a method for providing an opportunity for a user to express a preference for the types of questions to be asked in a challenge/response authentication procedure, according to an embodiment of the disclosure.

Figure 7 illustrates a processor and related components suitable for implementing the several embodiments of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

In the category of things a person knows, a challenge/response authentication procedure may be used. A challenge/response authentication method may require the user to provide a correct response to a question, the answer to which was previously supplied by the user. Examples include the user's mother's maiden name, the name of a pet, where the user went to high school, and similar questions. The authenticating entity reproduces the question and checks the user's current response with a response previously supplied. A match allows authentication to complete or continue. The usefulness of this method is limited by the fact that the questions asked must have been asked of the user before this authentication session, and the user must have previously answered the questions.

In an embodiment, a challenge/response authentication procedure is used wherein the challenge questions and responses can change each time an authentication procedure is performed. More specifically, the challenges and responses are based on the recent actions and/or transactions an individual has had with an entity (e.g., a bank, a credit card company, a brick and mortar store, an on-line store, a combination of a physical entity and an on-line entity, etc.) or with a device used by the individual. An entity can use any and all interactions, transactions, or event records carried out during normal transactions and use any combination of them when it acts as an authenticating entity. An entity becomes an authenticating entity any time a user needs to authenticate herself or himself to the entity. The authenticating entity then accesses and uses information about activities that a device or other entity has recently or over time recorded or logged and can dynamically formulate challenge questions based on that information. The individual seeking authentication would be aware of the information on which the challenges were based and would be able to correctly answer the questions. A potential impostor would be unlikely to be aware of the information and therefore would not be likely to give correct answers.

It should be noted that authenticating entities and activities may be embedded within each other. For example, a handheld device being used to gain access to the web acts as an authenticating entity when the user has to log in before using the handheld device. If the user then accesses a bank through its web interface, the bank acts as the authenticating entity in granting access to an account. In some embodiments, a combination may be formed of events originating from both the handheld device and the bank so that the information used by an authenticating entity in the challenge/response is not from a single source. This is explained in more detail below.

Two general categories of circumstantial information can be made available to an authenticating entity for use in formulating challenge questions and determining whether the answers to the challenges are correct. One category deals with interactions the individual has with the authenticating entity, either in person or via some type of electronic device (including, for example, a dedicated device such as an ATM as well as through nondedicated devices such as a laptop using the internet). The other category deals with interactions an individual has with an electronic device. As used herein, the terms "device" and "electronic device" can refer to any component, such as a telephone, smart phone, personal digital assistant, laptop computer, desktop computer, or similar device, via which a user might perform an act that involves authentication.

As described in more detail below, examples of interactions in the first category might include making a deposit to or withdrawal from a bank account, making a payment on an account, or checking a balance on an account. Examples of interactions in the second category might include sending or receiving an email, placing or receiving a voice call, or visiting a web site. The two categories are not mutually exclusive. For example, a transaction in which a user visits a bank's web site to perform an account balance inquiry could belong to both categories.

In an embodiment, an authenticating entity, such as a bank, a credit card company, or a utility company, can have access to information in either or both of these categories. The authenticating entity can use this circumstantial information to formulate a challenge question about an individual's behavior that only that individual would be likely to know. As one example, a bank would be aware of all the recent transactions a customer has made. The bank might also have access to information about the customer's email account. Using this information, the bank could ask the customer such questions as, "When was the last time you checked the balance in your savings account?" or "Who was the last person you received an email from?" or both. The customer would be likely to know the answers to such questions but an impostor would not, so correct answers to such questions could confirm the customer's authenticity.

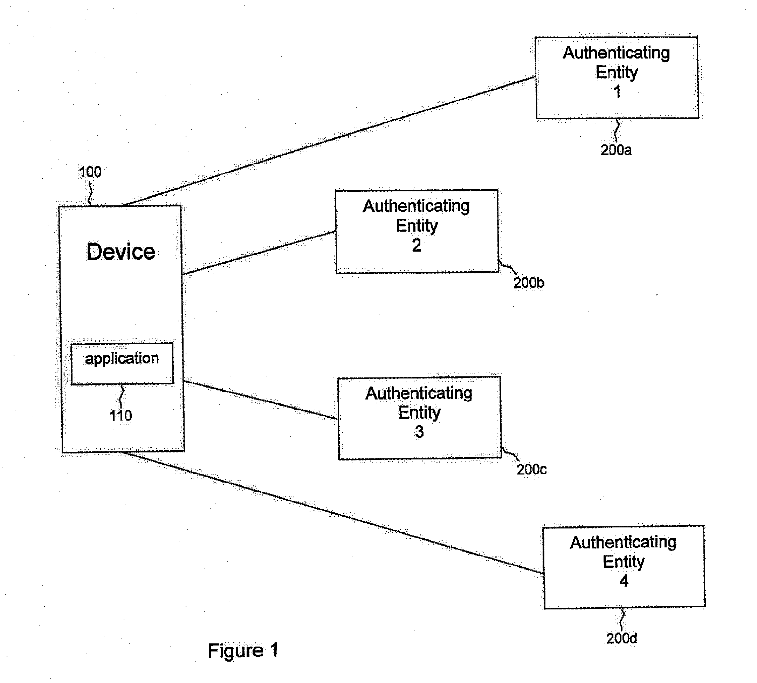

Additional examples and embodiments are now provided with reference to Figure 1, which illustrates embodiments of components that might make use of such circumstantial authentication systems and methods. A device 100 can communicate with a plurality of authenticating entities 200. As mentioned previously, the device 100 might be any component, such as a computer or a smart phone, that a user might use to perform an act that involves authentication. The authenticating entities 200 could be any entities that perform an authentication procedure on a user of the device 100 in order to verify the identity of the user. For example, the authenticating entities 200 might be banks, credit card companies, utility companies, online retailers, online payment mediators, internet service providers, or other entities. While four authenticating entities 200 are shown, other numbers could be present.

It should be noted that the device 100 can act as an authenticating entity when enabling access to itself and can use its own internal databases from which it draws information to ask the challenge questions. That is, there may be self-contained transactions where one device is both the authenticating entity and the information repository.

The authenticating entities 200 typically collect and store information related to the interactions that users have with the authenticating entities 200. The information that a particular authenticating entity 200 collects and stores can be referred to as the entity-specific information for that authenticating entity 200. It should be emphasized that the entity-specific information is already stored by and available to the authenticating entities 200, and thus no extra work is needed to collect and store this information. A bank, for instance, typically stores information related to the activities on a user's account. Existing challenge/response procedures, for instance asking the user's mother's maiden name, may require extra work since the mother's maiden name is not related to the account activities. In the present embodiments, there is available a pool of possibly sensitive, entity-specific information that has already been collected by an authenticating entity 200 or the device 100 for other purposes. One authenticating entity 200 would not necessarily have access to the entity-specific information collected by another authenticating entity 200. For example, a bank might not have access to credit card-related information and vice versa, and neither might have access to recent email activity of the user of the device 100 (if the device 100 has that capability).

The following examples illustrate some types of entity-specific information that might be collected and stored, but these examples should not be considered a comprehensive list of such information. A bank might retain information about account balances, the dates of balance inquiries, the dates and amounts of withdrawals and deposits, loan request and payment information, whether or not a receipt was requested for a transaction, and other bank-related information. A credit card company might retain information about the dates, places, and amounts of purchases, the dates and amounts of payments, the user's credit limit, the payment due date, and other credit card-related information. A utility company might retain information about the dates and amounts of payments, usage levels, and other utility-related information. An online retailer might retain information about the types, dates, places, and amounts of purchases, items currently in an online shopping cart, items recently viewed online, and other online purchase-related information. An authenticating entity 200 might also retain information about the last time the user logged on to a web site managed by the authenticating entity 200, pages visited within the web site, user preference settings on the web site, and other information related to interactions with the authenticating entity's web site. One of skill in the art and having the benefit of the present disclosure might recognize other entity-specific information that the authenticating entities 200 might typically collect and store that is potentially usable with the herein disclosed challenge/response authentication techniques; all such information is intended to be included herein.

In addition to the entity-specific information, information related to user interactions with the device 100 or applications on the device 100 might be collected for use by the authenticating entities 200 in formulating circumstantial challenge questions. Such information can be referred to as contextual information. Contextual information can include, in some but not all embodiments, data extracted from the device's or the authenticating authority's existing databases and/or log entries and not from anywhere else. Contextual information might include email-related information such as persons to whom emails have been sent or from whom emails have been received; dates or subjects of sent or received emails; name, content, or size of attachments; user preference settings; and other email-related information. Contextual information might also include voice call-related information such as telephone numbers to which calls have been placed or from which calls have been received, the length of recent telephone calls, and other voice call-related information. Contextual information might also include web-related information such as websites recently visited, length of time spent at a particular web site, items recently downloaded or uploaded, user preference settings, and other web-related information. Contextual information might also include application-related information such as applications that have recently been launched, data that has recently been manipulated in applications, scores and other information related to games that have recently been played, user preference settings, and other application-related information. Contextual information might also include photograph-related information such as date and tag information for photographs stored on the device 100. Contextual information might also include global positioning system (GPS)-based information such as locations the user has recently visited as determined by the position of the device 100. Contextual information might also include settings and status information for the device 100 itself, such as which applications have been installed, alarm times, ring tones, wallpaper or screen saver images, user preferences, or other device-specific information. One of skill in the art and having the benefit of the present disclosure might recognize other contextual information that might be collected for use by the authenticating entities 200 in formulating circumstantial challenge questions.

Contextual information might be collected in either or both of two different manners. In an embodiment, the device 100 includes an application 110 that promotes the collection of contextual information. A different application 910 might collect contextual information for each different authenticating entity 200, or a single application 110 might collect contextual information for a plurality of authenticating entities 200. Contextual information might be sent to an authenticating entity 200 without being stored in the application 110 or the device 100, might be stored in the application 110 or the device 100 and then transmitted to an authenticating entity 200 without being requested by an authenticating entity 200, or might be stored in the application 110 or the device 100 and then transmitted to an authenticating entity 200 upon being requested by an authenticating entity 200.

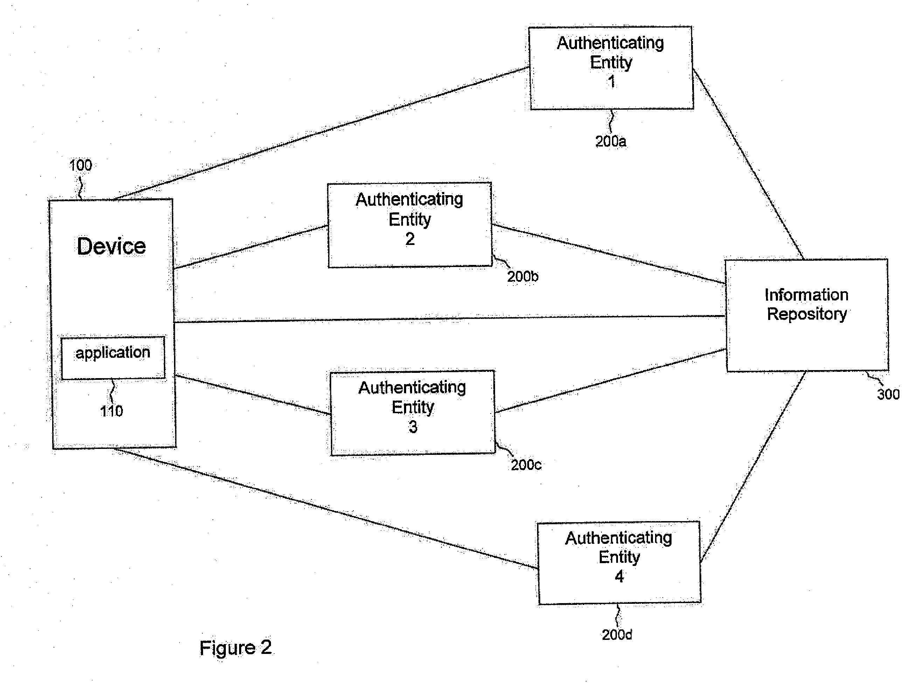

Figure 2 illustrates an alternative embodiment. In this case, in addition to or instead of the device 100 collecting contextual information via the application 110, the device 100 might send contextual information to an information repository 300, where the contextual information can then be stored. The information repository 300 might be managed by a third party that is trusted by the user of the device 100 and by the authenticating entities 200. Alternatively, one or more of the authenticating entities 200 might manage one or more information repositories 300. The authenticating entities 200 can retrieve contextual information from the information repository 300 and use the contextual information in formulating circumstantial challenge questions. Additionally, the information repository 300 may contain contextual information from the device 100 and information supplied by a plurality of authenticating entities, allowing questions to be generated based on all the collected information.

After obtaining contextual information about the user of the device 100 from the application 110 and/or from the information repository 300, an authenticating entity 200 can dynamically formulate challenge questions and answers based on recent contextual information and/or recent entity-specific information. An authenticating entity 200 can then present one or more of the circumstantial challenge questions on the device 100 when the user uses the device 100 to perform an act that involves authentication by that authenticating entity 200. The presentation of a circumstantial challenge question on the device 100 might be a visual display of a question on a display screen of the device, an automated voicing of a question, a haptic challenge, or some other type of presentation. The authenticating entity 200 might consider the user to be authentic if the user correctly answers at least one circumstantial challenge question.

Since the information on which the circumstantial challenge questions are based is derived from circumstances that would be readily known by the user of the device 100, the answers to the questions formulated in this way are likely to be known by the user. However, since this information changes frequently and would not be readily known by others, the answers to the questions are not likely to be known by an impostor. The circumstantial challenge questions could be different each time a user performs an act that involves authentication in order to decrease the likelihood that an impostor would know the answer to a question.

In addition, a time constraint on the information that is used to formulate circumstantial challenge questions and answers could further thwart impostors. For example, the circumstantial challenge questions could be based on information generated only within a pre-specified time period prior to the user performing an act that involves authentication, so that an impostor might not have sufficient time to learn the information. Alternatively, the circumstantial challenge questions could be based on information generated before a pre-specified time. For example, if an impostor gained access to a secure service, any authentication performed after the break-in might be based on information that the impostor then began sharing with the authenticating entity 200. The impostor might be mistakenly authenticated in such a case. However, it is unlikely that the impostor would be aware of contextual information or entity-specific information that was generated prior to the break-in. Formulating circumstantial challenge questions based on information that was generated prior to a pre-specified time could prevent the use of questions that are based on information provided by an impostor. In general, all of the information shared by an authenticating entity 200 and a user could be used to formulate circumstantial challenge questions. The decision on which parts of this information are used and how they are used is implementation dependent.

The authenticating entities 200 might be willing to subscribe to a third-party service that manages the information repository 300 in order to improve their authentication procedures. Alternatively, an authenticating entity 200 might be willing to manage the information repository 300 in order to achieve such an authentication procedure improvement.

A user of the device 100 might be willing to allow the application 110 and/or the information repository 300 to collect and store contextual information in order to enhance security and facilitate authentication. That is, the user might sacrifice some privacy by allowing the contextual information to be collected, but in return the user receives increased assurance that an impostor is unlikely to steal the user's identity by learning or guessing the answers to challenge questions. Authentication of a legitimate user is also facilitated since the user merely needs to remember aspects of recent transactions rather than the possibly obscure answers to traditional challenge questions.

The following examples illustrate some challenge circumstantial questions that an authenticating entity 200 might formulate and ask when a user of the device 100 performs an act that involves authentication by the authenticating entity 200, but these examples should not be considered a comprehensive list of such questions. Using entity-specific information, a bank might ask questions such as, "Is your checking account balance greater than or less than $1000?" or "When did you last check your savings account balance?" or "What was the amount of your most recent checking account withdrawal?". A credit card company might ask questions such as, "is your credit limit greater than or less than $1000?" or "When did you last check your current balance?" or "What is one of the five most recent stores at which you used this card?". An online retailer might ask questions such as, "What was your most recent purchase with us?" or "Which of the following items is currently in your online shopping cart?" or "In the last seven days, have you purchased a single item from us that cost more than $100?".

Using email-related contextual information, an authenticating entity 200 might ask questions such as "Who is the most recent person you sent an email to?" or "Have you received an email with the word 'meeting' in the subject line today?" or "Have you received an email with a photograph attached in the last five days?". Using voice call-related contextual information, an authenticating entity 200 might ask questions such as "What is the most recent number you have dialed for a voice call?" or "In the last five days have you engaged in a voice call that lasted more than ten minutes?". Using web-related contextual information, an authenticating entity 200 might ask questions such as "Have you visited a web site with the 'edu' domain name today?" or "Have you uploaded a photograph in the last seven days?" or "What is the name of the last company you sent a payment to using an intermediary payment service?". Using application-related contextual information, an authenticating entity 200 might ask questions such as "Have you used a word processing program today?" or "What is the name of the most recent spreadsheet document you have opened?" or "Have you achieved a new high score in any game you have played in the last seven days?". Using GPS-related contextual information, an authenticating entity 200 might ask questions such as "How many days were you in New York last month?" or "Have you been on the east side of Toronto in the last three days?" or "Have you driven on Interstate 90 in the last five days?". One of skill in the art and having the benefit of the present disclosure might recognize other challenge questions that the authenticating entities 200 might dynamically formulate based on entity-specific information and/or contextual information and ask as part of an authentication procedure, all of which is intended to be within the scope of the present disclosure.

A user of the device 100 might answer such questions by entering text into the device 100, by selecting one of a set of answers presented on the device 100, by voicing a response, or in some other manner. Since some of the questions could be answered with a "yes" or "no" response or with a selection from a multiple choice list, it may be possible for an impostor to correctly guess the answers to some of the questions. To prevent such deception, an authenticating entity 200 might ask a plurality of challenge questions and require that a particular number of questions be answered correctly. Access would not necessarily be denied if the user answered a question incorrectly, since the user might legitimately fail to remember some entity-specific information or contextual information. However, the more questions a user answers correctly, the greater the likelihood that the user is authentic. In an embodiment, the number of questions that are answered correctly could be converted into a probability that the user is authentic, and only an individual with a probability score greater than a pre-specified level would be considered authentic.

For example, it might be determined that an individual capable of correctly answering 70% or more of the challenge questions is highly likely to be authentic. An individual who correctly answers at least three out of four challenge questions would then be considered authentic. If five challenge questions are asked, four or more would need to be answered correctly. If six challenge questions are asked, five or more would need to be answered correctly. If seven challenge questions are asked, five or more would need to be answered correctly, and so on. In other examples, other percentages and other numbers of challenge questions could be used.

In addition, an authenticating entity 200 might ask "red herring" questions that an authentic user would not be expected to know the answer to, but that an impostor might try to answer. A failure to respond or a response such as "I don't know" might be an indication that a user is authentic, while any response other than "I don't know" might be an indication that a user is an impostor. Using a combination of legitimate questions and "red herring" questions, an authenticating entity 200 might be able to determine with great accuracy the authenticity of an individual performing an act that involves authentication.

While this circumstantial authentication procedure has been described as a stand-alone authentication procedure, it should be understood that this procedure could be used in combination with other known authentication procedures, such as passwords, personal identification numbers, or traditional challenge/response procedures.

Also, the preceding description has focused on a scenario where the device through which entity-specific information and contextual information is collected is the same device that is used to perform an act that involves authentication, but this is not necessarily the case. Entity-specific information might be generated by multiple different devices interacting with a single authenticating entity. For example, an individual might use a smart phone to check on the balance in a checking account on Monday, might use a laptop computer to check on the balance in a savings account at the same bank on Tuesday, and might use a desktop computer to check on the balance on a loan at the same bank on Wednesday. The bank could use any of these transactions to formulate a circumstantial challenge question and could present the challenge question when the individual uses any of these devices or another device to perform an act that involves authentication by the bank.

In addition, if an authenticating entity is aware that a single user is associated with two or more different devices, contextual information could be collected from a first device and challenge questions could be presented on a second device. For example, contextual information could be collected for a user based on the user's cell phone usage and could be available to an authenticating entity. If the user uses a laptop computer to perform an act that involves authentication by that authenticating entity, the authenticating entity could use the cell phone-based contextual information to formulate challenge questions that are presented on the laptop.

It should also be understood that the entity-specific information is not necessarily based only on interactions performed on a device. Such information may be based on an in-person interaction between an individual and an authenticating entity 200. For example, if an individual goes to a bank in person to make a deposit or withdrawal or to perform some other transaction, the bank could use information about that transaction to formulate a circumstantial challenge question similar to any of the bank-related questions mentioned above. The question could then be presented on a device the individual uses at a later time to perform an act that involves authentication by the bank.

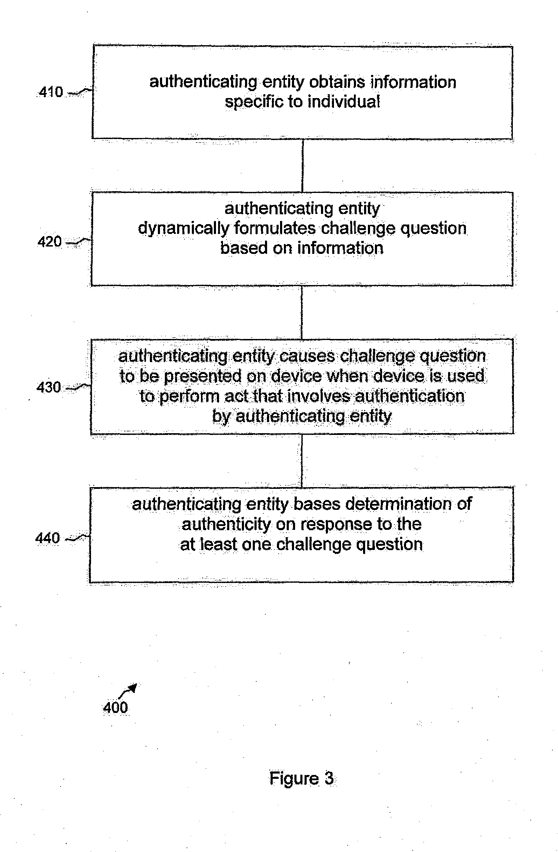

Figure 3 illustrates an embodiment of a method 400 for authentication. At box 410, an authenticating entity obtains information specific to an individual. The information might be received from the individual or the individual's device or might be retrieved from an internal or external data store. At box 420, the authenticating entity dynamically formulates at least one challenge question based on the information. At box 430, the authenticating entity causes the at least one challenge question to be presented on a device when the device is used to perform an act that involves authentication by the authenticating entity. At box 440, the authenticating entity bases a determination of authenticity on a response to the at least one challenge question. Note that the actions associated with box 440 may be one part of an overall authentication process or may be the entire authentication process.

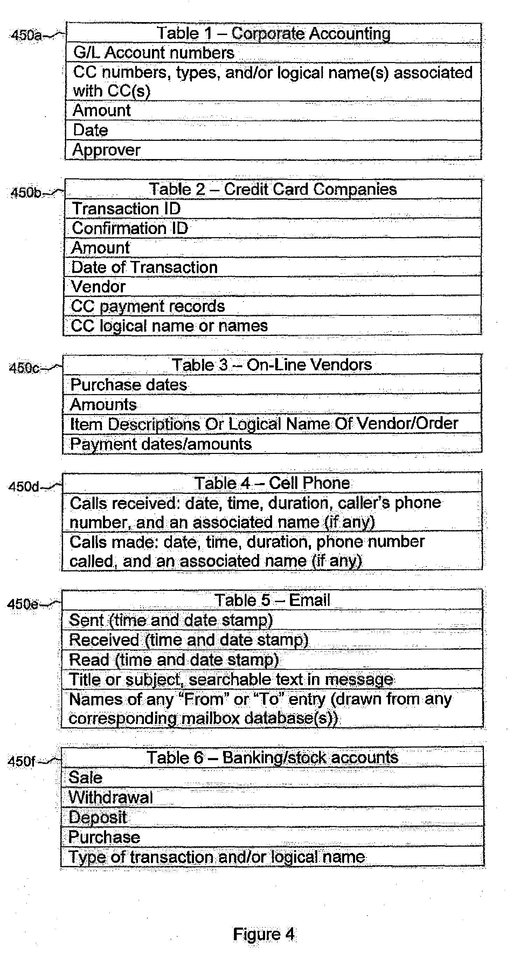

Figure 4 illustrates a set of tables 450 with examples of the types of data that could be extracted and used for authentication from an authenticating entity's databases. Table 1 450a contains data related to corporate accounting, such as G/L account numbers, credit card numbers, transaction amounts, transaction dates, and an approver. There may not be an approver, but that information would be known to the user. In addition, in some embodiments there may be a logical name associated with each account, or associated with a set of accounts. In one embodiment the association between one or more logical names and one or more accounts would be kept by the authorizing entity in its accounting database. However, other ways implementing an association between a logical name and an account, a logical name and a set of accounts, multiple logical names and an account, or multiple logical names that are associated with a set of accounts may be used, as would be known to a person of skill in this art and having the benefit of this disclosure. For any implementation used, the result would be an association between a name space and an account space, which would allow use of one of more names during an authentication session in addition to, or in some embodiments as a replacement for, account numbers.

Figure 4 has other tables that make use of the phrase "logical name". Those table entries signify the same concept as just described for table 1 450a above, where a name or names is/are associated with an account, order, or other record being kept. The use of logical names may be useful or helpful to users who are name rather number oriented. Note that the use of logical names as used herein is just one possible embodiment.

Table 2 450b contains data related to credit card companies, such as transaction ID, confirmation ID, amounts of transactions, dates of transactions, date of posting, vendor, and credit card payment records including the amounts and dates of payments. Other possible data may include a logical name for the card (i.e., "My Wells Fargo® Card" or "My second credit card" or "Company Card" or "J's Card" or any other alpha numeric string). In one implementation, more than one logical name may be associated with the card, in which case several questions using different logical names (or a combination of several logical names) could be generated during a circumstantial authentication session.

Table 3 450c contains data related to on-line vendors, such as purchase dates, amounts of transactions, item descriptions, and payment amounts and dates. In one embodiment one or more logical names will be associated with the vendor, with each order, or any combination thereof.

Table 4 450d contains data related to a cell phone, such as date, time and duration of calls received and date, time and duration of calls made. Additionally any name information that is associable with the call is available for use as well. In one embodiment the associated name or names would be found in a personal contacts database on the cell phone.

Table 5 450e contains data related to email, such as time sent, time received, time read, title or subject, and any names or logical alpha-numeric strings associated with any entry in the "To" or "From" fields. In one implementation these are found in a corresponding mailbox database ("contacts" databases, for example).

Table 6 450f contains data related to banking/stock accounts, such as sale, withdrawal, deposit, and/or purchase, each with a time stamp and amounts involved. This information could also include the type of transaction, such as whether the transaction was at a counter or online and, if a brokerage account is involved, what was sold (e.g., stock symbols or company names). In one embodiment, logical names may be associated with either the account, with a transaction, or both. An example might be "Shorting X", which would be used by an account holder to indicate a particular transaction in which they took a major short position relative to stock X. Another example might be "Y pay-off", indicating a particular banking transition where a user is finally able to pay-off a particular debt to Y. A further example might be "My IRA", indicated the account as a whole to the user. A name may be any alpha-numeric and/or symbolic character or character string usable or set by a user.

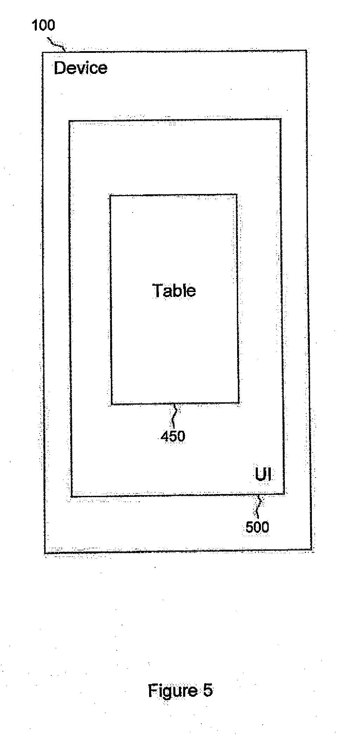

Figure 5 illustrates a user interface 500 that might appear on the device 100 and that might allow a device user to specify information that should be used for generating challenge questions. The user can specify, by being shown one or more of the tables 450, what the user prefers to be asked about. This feature can accommodate people who might remember some information but not other information. For example, some people might prefer to be asked about names rather than numbers or would rather be asked about the source and destination of emails rather than the time of transmission or reception. Similarly, some people might prefer to be asked about the names of stocks sold rather than the number of stocks or the amount sold. In an embodiment, the user can use the user interface 500 to state a preference, such as whether questions should be primarily numbers-oriented or name-oriented. Questions could then be formed by extracting one type of data over another, when there is a choice.

Also, the user interface might allow any specific field to be renamed by a user to allow the user to interact with the challenge-response in a preferred manner. For example, a mnemonic could be used for any field, such as renaming a first credit card to "R&D" and a second credit card to "Sales". Similarly, any vendor that appears in shorthand on a credit card bill might be renamed to a more mnemonic name. String substitutions of the renamed fields might then be made as part of the generation of the challenge questions.

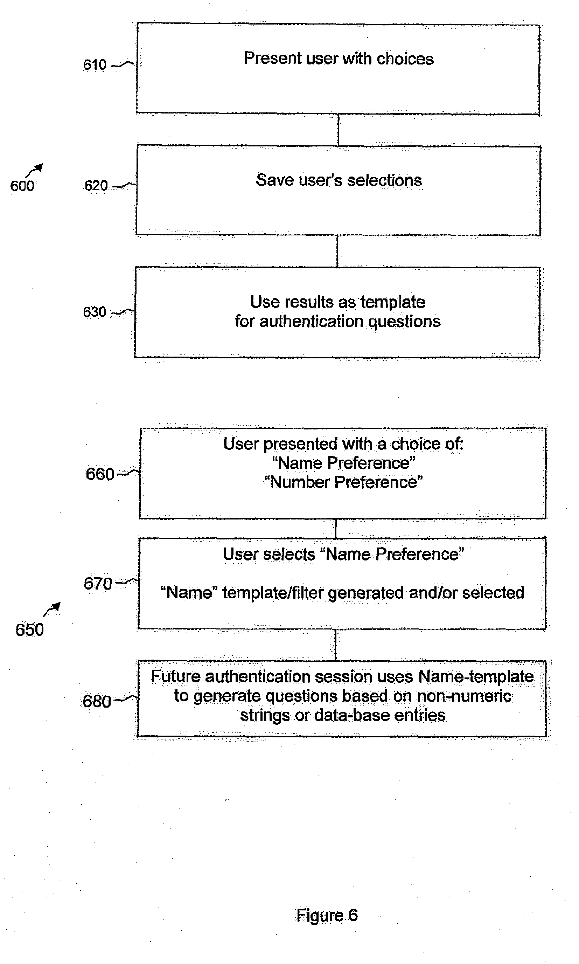

Figure 6 illustrates an embodiment of a method 600 for providing an opportunity for a user to express a preference for the types of questions to be asked in a challenge/response authentication procedure. At box 610, a challenge/response authentication system presents a user with a plurality of choices regarding the types of questions the user would like to be asked. The choices might be displayed on a user interface of a device used by the user and might be derived from data such as the data in the tables of Figure 4. At box 620, the system saves the selections made by the user. At box 630, the system uses the selections made by the user as a template for formulating and displaying challenge/response authentication questions.

A more particular embodiment is found generally at 650. The actions corresponding to box 660 include those of presenting a user with 2 choices at the user interface of a device. The two choices correspond to a user preference to be used during an authentication session. The presented preferences are to one of "names" or "numbers".

Continuing to box 670, the user selects "Name Preferences". After receiving an indication of the "names" selection, a device either generates or selects, as part of its programming, a template or filter for use in future authentication sessions. Any workable method may be used to generate or select an appropriate template or filter. If no template or filter exists it may be generated upon a user selecting that option by pre-existing programming, or, if the appropriate template or filter exists it may be simply selected for future use. A template or filter will be generated and used in a manner consistent with the data being used to generate authentication questions, and may be implemented in a wide variety of ways. The particulars of implementing one particular system or embodiment will be determined, and then implemented, by those of skill in this field who also have the benefit of the present disclosure. Generally, the selection of "Names" will result in the use of a filter or template that, when selecting data to be used in a question, will preferentially pull out and use data that contains a name or alpha-numeric string component (in some embodiments it may also contain numeric data).

The use of data that fits the user-selected criteria may be absolute or relative, depending on the embodiment. In some embodiments, the authentication questions will always make use of data containing names or alpha-numeric strings. In other embodiments, the questions will make use of name fields with some numerical-based questions also presented as part of a stream of questions. Each embodiment may determine how strictly a user selection or user preference is to be followed during future authentication sessions.

Box 680 corresponds to actions during an authentication session at a time after the user selection has been. The previously selected user preference means that a names-template, a names-filter, a predetermined set of fields to use in questions, or other implementation method will be used in generating questions. In this example, since the user has selected a preference for names, and using Figure 4 as an example having selectable data to use, questions will be formulated based on the data corresponding to:
lines 2 and 5 of 450a;
lines 5 and 7 of 450b;
line 3 of 450c;
lines 1 and/or 2 of 450d (specifically any associated names);
lines 4 and 5 of 450e; or
line 5 of 450f
depending on which entity was generating authentication questions, and what data they had.

Correspondingly, if the user had selected "Numerical Preference" instead of "Name Preference", the authentication questions would be more oriented to the data corresponding to the numerical entries of the examples found in Figure 4.

Trust levels might include the concept of "breadth" in the challenge questions. The highest level of trust, say for financial institutions, might require more specific answers. Lower levels of trust, say to an email application or an account on a cell phone, can be more generic. For example, the lowest level of trust might include a question such as "Did you charge something to credit card xxx in the last 12 months?" and the highest level of trust might include a question such as "How much was the second-to-last charge you made, and to which credit card?".

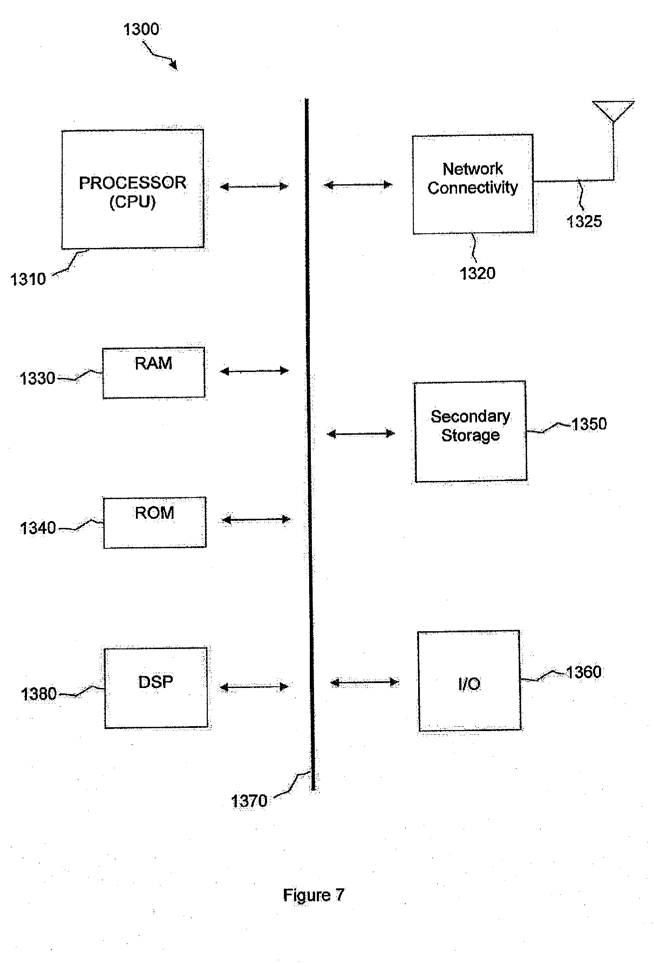

The device 100 might include a processing component that is capable of executing instructions related to the actions described above. Figure 7 illustrates an example of a system 1300 that includes a processing component 1310 suitable for implementing one or more embodiments disclosed herein. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information.

The network connectivity devices 1320 might also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 might include separate receiving and transmitting units or a single transceiver. Information transmitted or received by the transceiver component 1325 may include data that has been processed by the processor 1310 or instructions that are to be executed by processor 1310. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the I/O devices 1360 instead of or in addition to being a component of the network connectivity devices 1320.

In an embodiment, a method for authentication is provided. The method comprises an authenticating entity obtaining information specific to an individual, the authenticating entity dynamically formulating at least one challenge question based on the information, the authenticating entity causing the at least one challenge question to be presented on a device when the device is used to perform an act that involves authentication by the authenticating entity, and the authenticating entity basing a determination of authenticity on a response to the at least one challenge question.

In another embodiment, an authentication system is provided. The authentication system comprises a first component configured to obtain information specific to an individual, a second component configured to dynamically formulate at least one challenge question based on the information, a third component configured to cause the at least one challenge question to be presented on a device when the device is used to perform an act that involves authentication, and a fourth component configured to judge authenticity based on an answer to the at least one challenge question.

In another embodiment, a device is provided. The device comprises a processor configured such that the device transmits information related to an action that occurs on the device, and further configured such that, when a user of the device performs an act that involves authentication, the device presents at least one challenge question dynamically formulated based on the information.

The information related to the action that occurs on the device might be collected by an application on the device and made available to an authenticating entity for use by the authenticating entity in formulating the at least one challenge question. The information related to the action that occurs on the device might be transmitted to a repository, stored in the repository, and retrieved from the repository by an authenticating entity for use by the authenticating entity in formulating the at least one challenge question. At least one challenge question might be different from a previous challenge question each time the user of the device performs an act that involves authentication. The information related to the action that occurs on the device might be information that has been generated within a pre-specified time period prior to the user of the device performing the act that involves authentication.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method for authentication, comprising:
an authenticating entity obtaining information specific to an individual;
the authenticating entity dynamically formulating at least one challenge question
based on the information;
the authenticating entity causing the at least one challenge question to be presented
on a device when the device is used to perform an act that involves authentication by the authenticating entity; and
the authenticating entity basing a determination of authenticity on a response to the
at least one challenge question.

2. The method of claim 1, wherein the information is related to at least one of:
a transaction performed between the individual and the authenticating entity; and
an action that occurs on the device.

3. The method of claim 1, wherein the information specific to the individual is information that has been generated within a pre-specified time period prior to the individual performing the act that involves authentication.

4. The method of claim 1, wherein a score is calculated based on a number of challenge questions answered correctly, and wherein the individual is not considered authentic unless the score exceeds a value specified by the authenticating entity.

5. An authentication system, comprising:
a first component configured to obtain information specific to an individual;
a second component configured to dynamically formulate at least one challenge
question based on the information;
a third component configured to cause the at least one challenge question to be
presented on a device when the device is used to perform an act that involves authentication; and
a fourth component configured to judge authenticity based on an answer to the at
least one challenge question.

6. The system of claim 5, wherein the information is related to at least one of:
a transaction performed between the individual and an authenticating entity; and
an action that occurs on the device.

7. The system of claim 6 or method of claim 2, wherein the action that occurs on the device is at least one of:
reception by the device of data related to the individual;
reception by the device of an email related to the individual;
reception by the device of a voice call;
transmission by the device of data related to the individual;
transmission by the device of an email related to the individual;
transmission by the device of a voice call;
interaction by the individual with an application on the device; and
movement of the individual as determined by a positioning system on the device.

8. The system of claim 6 or method of claim 2, wherein the information related to the action that occurs on the device is collected by an application on the device and made available to the authenticating entity for use by the authenticating entity in formulating the at least one challenge question.

9. The system of claim 6 or method of claim 2, wherein the information related to the action that occurs on the device is transmitted to a repository, stored in the repository, and retrieved from the repository by the authenticating entity for use by the authenticating entity in formulating the at least one challenge question.

10. The system of claim 5 or method of claim 1, wherein at least one challenge question is different from a previous challenge question each time the individual performs an act that involves authentication.

11. The system of claim 5, wherein the information specific to the individual is information that has been generated within a pre-specified time period prior to the individual performing an act that involves authentication.

12. The system of claim 5, further comprising a component configured to calculate a score based on a number of challenge questions answered correctly, wherein the individual is not considered authentic unless the score exceeds a value specified by an authenticating entity.

13. A device, comprising:
a processor configured such that the device transmits information related to an
action that occurs on the device, and further configured such that, when a user of the device performs an act that involves authentication, the device presents at least one challenge question dynamically formulated based on the information.

14. The device of claim 13, wherein the device receives authentication when a correct answer to the at least one challenge question is entered into the device.

15. The device of claim 13, wherein the action that occurs on the device is at least one of:
reception of data by the device;
reception of an email by the device;
reception of a voice call by the device;
transmission of data by the device;
transmission of an email by the device;
transmission of a voice call by the device;
interaction with an application on the device; and
movement of the device as determined by a positioning system on the device.
